# EUROPEAN PATENT SPECIFICATION

(11) **EP 4 563 235 B1**
(45) Date of publication and mention of the grant of the patent: **22.04.2026**
(21) Application number: 23213456.9
(22) Date of filing: 30.11.2023
(51) Int. Cl.: B04B 1/20, B04B 7/02, F16M 1/08

(54) **A FRAME FOR A DECANTER CENTRIFUGE**
RAHMEN FÜR EINE DEKANTIERZENTRIFUGE
CADRE POUR CENTRIFUGEUSE DÉCANTEUSE

(43) Date of publication of application: 04.06.2025
(73) Proprietor: Alfa Laval Corporate AB, 221 00 Lund (SE)
(72) Inventor: ANDERSEN, Ole, 3520 Farum (DK)
(74) Representative: Alfa Laval Attorneys

(56) References cited:
- EP-B1- 2 637 797
- CN-A- 102 900 199
- CN-U- 218 581 008

## Description

The present invention relates to a frame for a decanter centrifuge, a decanter centrifuge and a method of producing a frame for a decanter centrifuge.

### Introduction

A decanter centrifuge is a centrifuge that during operation performs a centrifugal sedimentation process on a suspension of solid particles and a liquid. The decanter centrifuge comprises a bowl rotationally mounted on a frame. During operation, the suspension forms a ring-shaped liquid layer along the interior wall of the bowl under the action of centrifugal force, in which the denser solid particles settle to the drum wall radially to form a sludge, and the clarified liquid is discharged through a bowl overflow. The sediment is discharged by mechanical methods, typically using an Archimedean screw conveyor.

The bowl is typically supported horizontally on the frame by a bearing at either side of the bowl. Further, a drive motor, a gear box and, where necessary, a back-drive motor are as well mounted and supported by the frame. The rotating components of the decanter centrifuge, such as the bowl, are surrounded by a protective cover and a casing for collecting the separated solids and liquid. The casing typically forms an integrated part of the frame. To facilitate the service and the installation of the decanter centrifuge, the cover is mounted separately on the frame.

To be able to support the weight of the decanter centrifuge, the frame is typically made up of elongated metal box-shaped beams, which in turn are supported on a ground support connected to a foundation at the site of the installation. The ground support is typically in the form of four legs providing stability.

Recently, there has been a growing need for decanter centrifuges allowing a longer retention time of the suspension inside the bowl. One way of achieving this is to make the bowl of the decanter centrifuge larger and longer. Consequently, the frame supporting the bowl must be made longer. The frame must also be made sturdier to be able to carry the increased weight of the larger bowl.

The bowl is typically rotating at a speed of 2000rpm-6000rpm during operation. When the bowl is rotating at such high speeds it is inevitable that vibrations will occur. The vibrations will be induced into the frame and must be absorbed by the frame without causing any resonance effects in the frame. Using a higher bowl speed will induce higher frequencies into the frame. If the frequencies induced during operations cause resonance effects in the frame, it may result in significantly stronger vibrations in the frame and possibly damage to the frame. To avoid inducing resonance effects from the bowl into the frame, the frame must be made having an eigenfrequency (or natural frequency) being significantly higher than the frequency of the vibration induced into the frame by the rotation of the bowl.

The eigenfrequency of the frame is dependent on the bending rigidity of the frame and inversely dependent on the mass of the frame. More specifically, the eigenfrequency increases when the bending rigidity increases and decreases when the mass increases. Making the frame longer in the longitudinal direction while keeping the other dimensions of the frame unchanged will reduce the bending rigidity as the frame will have to be provided with longer box-shaped beams. It will also increase the mass, as more material will be used when making the frame longer. Thus, making the frame longer will significantly decrease the eigenfrequency of the frame. When the eigenfrequency of the frame approaches the eigenfrequency of the rotating bowl, resonance effects will occur.

To maintain the bending rigidity of the frame it can be made more sturdy. One way of making the frame sturdier using existing dimensions of the box-shaped beams of the frame is to use reinforcement plates attached to the box-shaped beams of the frame. Reinforcement plates have been suggested in the below prior art:
JP 7234489 describes a centrifugal separator having a frame having a hollow first frame member extending in a first direction, a hollow second frame member extending in a second direction and a connection portion connecting the first frame member to the second frame member. The connection portion including a first fixing portion being fixed to an end portion of the first frame member and a second fixing portion being fixed to an end portion of the second frame member. A reinforcing part being bridged between the first fixing part and the second fixing part and extending in a direction intersecting the first direction and the second direction.
JP07071052 describes a screw conveyer having reinforcing members fixed between a reinforcing ring and a casing.
KR200396783 describes a screw dehydrator with reinforcing plates installed in a semicircular ring shape.
CN212861338 describes vehicle energy absorption box having a reinforcing piece.

Further relevant prior art is disclosed in EP 2 637 797 B1, CN 218 581 008 U and CN 102 900 199 A.

The object of the present invention is thus to provide technologies for increasing the length of the bowl of the decanter centrifuge while preventing resonance phenomena in the frame.

### Summary of the invention

According to a first aspect of the present invention, the above object is realized by a frame for a decanter centrifuge, the frame defining a longitudinal direction, a vertical direction extending transversally relative to the longitudinal direction and a transverse direction extending transversally relative to the longitudinal direction and the vertical direction, the frame comprising:
two elongated box-shaped beams extending parallel relative to each other in the longitudinal direction between a first end and a second end,
at least two connecting elements extending in the transverse direction and interconnecting the box-shaped beams at a first position along the longitudinal direction and at a second position along the longitudinal direction, respectively, and
at least two ground supports extending in the vertical direction at a third position along the longitudinal direction and at a fourth position along the longitudinal direction, respectively, the third position being located adjacent the first end and the fourth position being located adjacent the second end,
each box-shaped beam comprising:
a C-shaped beam defining two horizontal flanges and a vertical web interconnecting the two horizonal flanges, the two horizontal flanges and the vertical web define an interior channel between themselves, and
a vertical plate interconnecting the two horizontal flanges opposite the vertical web, wherein the vertical web and the two horizonal flanges each comprises a reinforcement plate attached facing the interior channel of the C-shaped beam, the reinforcement plates extending in the longitudinal direction between a third end and a fourth end, the third end and the fourth end being located between the first end and the second end in the longitudinal direction so that the reinforcement plates extend only a part of the distance between the first end and the second end.

The frame is made up of the two box-shaped beams extending in the longitudinal direction and the at least two connecting elements between the two box-shaped beams in the transverse direction. The connecting elements can be used for supporting e.g. the bearings of the rotatable bowl of the decanter centrifuge, the casing below the bowl, the gearbox and the motors. The box-shaped beam is made of metal material and have an overall rectangular shape. The box-shaped beam is made up by the vertical plate and the C-shaped beam.

The C-shaped beam is typically made as an elongated metal element which has been formed in a C-shape having two horizontal flanges and a vertical web interconnecting the two horizontal flanges edge-to-edge. An interior channel is thus formed between the vertical web and the two horizonal flanges. The C-shaped beam is reinforced by the reinforcement plates which are attached on the web and on the two horizontal flanges facing the interior channel of the C-shaped beam. In this way the reinforcement plates are invisible from the outside and they thus do not affect the physical appearance of the frame. The vertical plate is attached edge-to-edge to the two horizontal flanges opposite the vertical web to form a rectangular and box-shaped beam. The box-shaped beam is thus hollow.

The reinforcement plates allow the box shaped beams to be longer while maintaining the bending rigidity of the frame, thereby maintaining the eigenfrequency of the frame. However, adding the reinforcement plates makes the frame heavier. This is negative as it decreases the eigenfrequency of the frame. However, it has been surprisingly found out that the reinforcement plates must not necessarily extend the full length of the box-shaped beam, i.e. the full length between the first end and the second end. To reduce the weight of the frame, the reinforcement plates can extend only a part of the distance between the first end and the second end. In particular, the reinforcement plates can be attached between positions along the longitudinal direction of the box shaped beam having higher bending stress and omitting the locations along the longitudinal direction of the box shaped beam having lower bending stress.

The ground supports are supporting the box shaped beams at a third and fourth position along the longitudinal direction. Each box shaped beam is thereby supported on the ground, i.e. a factory floor or the like, by the two ground supports which are extending downwards in the vertical direction and support the frame on the ground. The third position being located adjacent the first end and the fourth position being located adjacent the second end. It is understood to mean that the third position is closer to the first end than the centre point of the frame in the longitudinal direction whereas the fourth position is closer to the second end than the centre point of the frame in the longitudinal direction.

The bending stress will be low adjacent the first and second edges, i.e. near the ground supports, and higher near the longitudinal centre point of the box shaped beams, i.e. far from the ground supports. To lower the weight of the frame, the reinforcing plates can thus extend only a part of the distance between the first end and the second end without significantly reducing the bending stress as the bending stress is low adjacent the first and second edges. In this way the increase in mass of the frame will be lower, allowing the eigenfrequency of the frame to be higher.

According to a further embodiment of the first aspect, the C-shaped beam being manufactured as a unitary element. In this way there will be no joints in the C-shaped beam, allowing it to be more rigid and easier to produce. The C-shaped beam can e.g., be made by pressing, casting or moulding.

According to a further embodiment of the first aspect, the box shaped beam is made of metal, such as cast iron or carbon steel. Metal such as cast iron or carbon steel is typically used for the box shaped beam due to the increased rigidity and reduced maintenance requirements.

According to a further embodiment of the first aspect, the reinforcement plates are attached by spot welding and the reinforcement plates are provided with holes for the spot welding. In this way the reinforcement plates are securely fastened to the C-shaped beam, increasing the bending rigidity.

According to a further embodiment of the first aspect, the reinforcement plates are attached by fillet welding and the reinforcement plates define a gap in-between themselves for the fillet welding. By filling the gap between the reinforcement plates by fillet welds, the bending rigidity can be increased.

According to a further embodiment of the first aspect, the length between the first end and the second end is at least 20% longer than the distance between the third end and the fourth end, preferably 30% longer, more preferably 40% longer. By making the reinforcement plates shorter, the weight can be reduced without necessarily increasing the bending stress.

According to a further embodiment of the first aspect, the reinforcement plates are substantially centred between the first end and the second end. The reinforcement plates are thus placed at the location where they have the most effect, and that is close to the centre where the bending stress is the highest.

According to a further embodiment of the first aspect, the distance between the first end and the second end being 5-10 meters, preferably 6-9 meters, and the distance between the third end and the fourth end being 2-5 meters, preferably 3-4 meters. Standard decanter centrifuges are up to 5m long. The length of the decanter centrifuge can be increased by including the length of the frame and the reinforcing plates.

According to a further embodiment of the first aspect, the third position is located between the first end and the third end, and, the fourth position being located between the second end and the fourth end. As the bending stress at the ground support is very low, the reinforcement plates must no extend beyond the third and fourth positions, respectively, as the third and fourth positions are the locations of the ground supports.

According to a further embodiment of the first aspect, the first ground support and the second ground support are made as box-shaped legs being attached to one of the respective elongated box-shaped beams. Preferably, the frame is supported by four legs extending from the box-shaped beams to the ground. The legs can be made hollow, similar to the box-shaped beams.

According to a second aspect of the present invention, the at least one of the two connecting elements interconnecting the first ends of the parallel box-shaped beams, and, at least one other of the two connecting elements interconnecting the second ends of the parallel box-shaped beams. Interconnecting the ends of the parallel box-shaped beams further improves the bending rigidity of the frame.

According to a second aspect of the present invention, the above object is realized by decanter centrifuge comprising a decanter bowl mounted on a frame according to the first aspect.

According to a third aspect of the present invention, the above object is realized by method of producing a frame for a decanter centrifuge, the frame defining a longitudinal direction, a vertical direction extending transversally relative to the longitudinal direction and a transverse direction extending transversally relative to the longitudinal direction and the vertical direction, the method comprising the following steps:
providing two C-shaped beams extending parallel relative to each other in the longitudinal direction between a first end and a second end, each C-shaped beam defining two horizontal flanges and a vertical web interconnecting the two horizonal flanges, the two horizontal flanges and the vertical web define an interior channel between themselves,
attaching reinforcement plates facing the interior channel of the C-shaped beam, the reinforcement plates extending in the longitudinal direction between a third end and a fourth end, the third end and the fourth end being located between the first end and the second end in the longitudinal direction so that the reinforcement plates extend only a part of the distance between the first end and the second end,
interconnecting the vertical plate and the two horizontal flanges opposite the vertical web, thereby producing two elongated box-shaped beams extending parallel relative to each other in the longitudinal direction between the first end and a second end,
interconnecting the box-shaped beams at a first position along the longitudinal direction and at a second position along the longitudinal direction, respectively, by at least two connecting elements extending in the transverse direction, and
attaching at least two ground supports to each box-shaped beam, the ground supports extending in the vertical direction at a third position along the longitudinal direction and at a fourth position along the longitudinal direction, respectively, the third position being located adjacent the first end and the fourth position being located adjacent the second end.

The method according to the third aspect can be used for producing the frame according to the first aspect.

### Brief description of the drawings

FIG. 1 is a perspective view of a decanter centrifuge according to the present invention.
FIG. 2 is a cut-out perspective view of a frame according to the present invention.
FIG. 3 is a perspective view of a box-shaped beam according to the present invention.
FIG. 4A is a perspective view of a C-shaped beam according to the present invention.
FIG. 4B is a perspective view of reinforcement plates according to the present invention.
FIG. 4C is a perspective view of spot welding according to the present invention.
FIG. 4D is a perspective view of fillet welding according to the present invention.

### Detailed description of the drawings

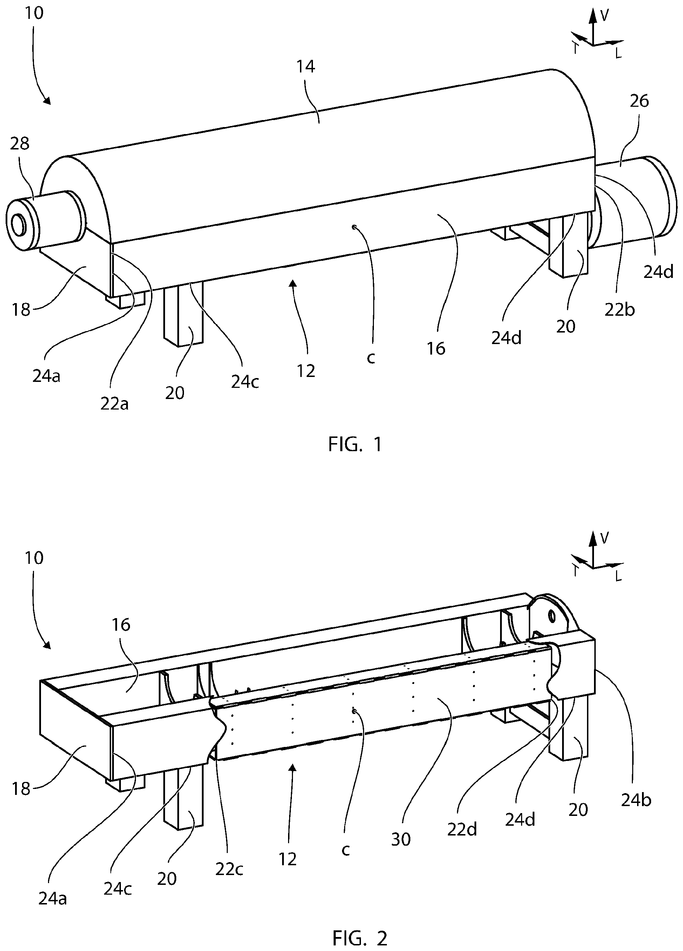

FIG. 1 is a perspective view of a decanter centrifuge 10 according to the present invention. The decanter centrifuge 10 comprises a frame 12 and a cover 14 mounted on the frame 12. The decanter centrifuge 10 comprises rotating components (not visible) which are rotatably mounted on the frame 12 below the cover 14. The frame 12 comprises two box-shaped beams 16 extending parallel to each other in the longitudinal direction L between a first end 22a and a second end 22b. The frame 12 further comprising at least two connecting elements 18 connecting the box-shaped beams 16 at a first position 24a and a second position 24b along the longitudinal direction L.

In the present embodiment, the first position 24a and the second position 24b being identical to the first end 22a and the second end 22b, respectively, however, it must not necessarily be the case. The frame 12 further comprises four ground supports 20 in the form of legs extending downwards from the box-shaped beams 16 in the vertical direction V for supporting the decanter centrifuge 10 on the ground (not shown). The ground (not shown) may be a factory floor or the like.

The vertical direction V being transversal relative to their longitudinal direction L. The ground supports 20 being connected to the box-shaped beams at a third position 24c and a fourth position 24d. The third position 24c being located between the first end 22a and a centre point C between the first end 22a and the second end 22b, and, the fourth position 24d being located between the second end 22b and the centre point C. A drive motor 26 and a back drive motor 28 is supported by the frame 12.

FIG. 2 is a cut-out perspective view of a frame 12 according to the present invention. Reinforcement plates 30 are located within the box shaped beam 16. The reinforcement plates 30 extend between a third end 22c and a fourth end 22d. The third end 22c is located between the third position 24c and the centre point C, whereas the fourth end 22d is located between the fourth position and the centre point C. Further, the third position 24c is located between the first end 22a and the third end 22c, and, the fourth position 24d being located between the second end 22b and the fourth end 22d.

The reinforcement plates 30 add bending rigidity to the box-shaped beam 16 for increasing the eigenfrequency of the frame 12. The reinforcement plates 30 do not extend all the way to the first end 22a and second end 22b as the added weight will decrease the eigenfrequency whereas the bending rigidity is not increased by the added plates adjacent the first end 22a and second end 22b. In this way the frame 12 can be made longer and consequently the rotating components, i.e., the bowl (not shown), can be made longer as well.

Further connecting elements 18 are typically provided between the box-shaped beams 16 for mounting bearings (not shown) of the rotating components and/or a casing below the rotating components (not visible) etc.

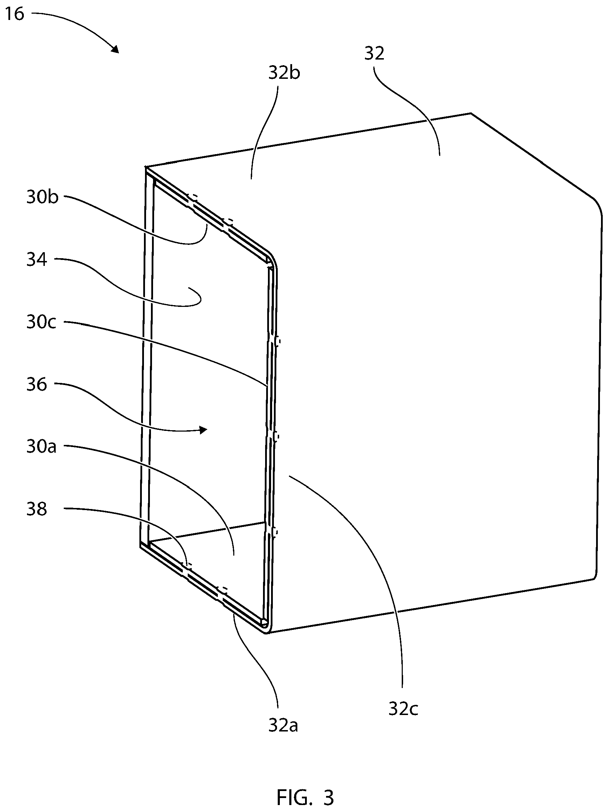

FIG. 3 is a perspective view of a box shaped beam 16 according to the present invention. The box-shaped beam 16 comprises a C shaped beam 32 and vertical plate 34. The C-shaped beam comprises a first horizontal flange 32a, a second horizontal flange 32b and vertical web 32c. The vertical web 32c interconnects the first horizontal flange 32a and the second horizontal flange 32b at opposite edges. The vertical plate 34 interconnects the first horizontal flange 32a and the second horizontal flange 32b edge-to-edge, opposite the vertical web 32c, thereby forming an interior channel 36 between the first horizontal flange 32a, the second horizontal flange 32b, the vertical web 32c and the vertical plate 34.

The reinforcement plates 30 comprise a first reinforcement plate 30a being attached to the first horizontal flange 32a, a second reinforcement plate 30b being attached to the second horizontal flange 32b and a third reinforcement played 30c being attached to the vertical web 32c. The reinforcement plates 30 are attached facing the interior channel 36 of the box-shaped beam 16 and are thus not visible from the outside.

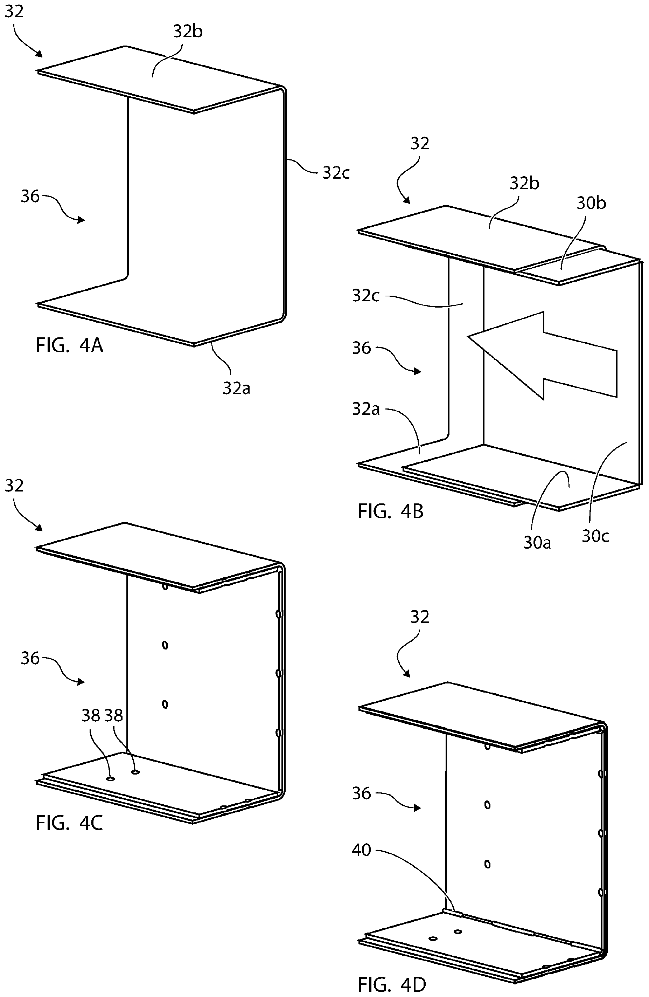

FIG. 4A is a perspective view of a C-shaped beam 32 according to the present invention. The C-shaped beam 32 is typically made of metal, such as cast iron or carbon steel. It is typically made in one piece, i.e., as a unitary element, and typically extend the full length of the frame.

FIG. 4B is a perspective view of the installation of the reinforcement plates 30 into the C-shaped beam 32 according to the present invention. The first reinforcement plate 30a, the second reinforcement plate 30b and the third reinforcement plate 30c are typically made as three separate pieces. In the present embodiment, the first reinforcement plate 30a, the second reinforcement plate 30b and the third reinforcement plate 30c are made having substantially the same size as the first horizontal flange 32a, the second horizontal flange 32b and the vertical web 32c, respectively, however, it is not necessary as they can also be smaller as long as the reinforcement plates 30 fit in the interior channel 36. However, the reinforcement plates 30 do not extend the full length of the C-shaped beam 32. The reinforcement plates 30 are typically attached before attaching the vertical plate (not shown).

FIG. 4C is a perspective view of the spot welding between reinforcement plates 30 onto the C-shaped beam 32 according to the present invention. The reinforcement plates 30 typically have apertures 38 for spot welding the reinforcement plates 30 to the C-shaped beam 32. In this way the reinforcement plates 30 are securely attached to the C-shaped beams 32 and the reinforcement plates 30 are thereby able to increase the bending rigidity of the C-shaped beam 32.

FIG. 4D is a perspective view of the fillet welding between the reinforcement plates 30 according to the present invention. It is possible to interconnect the reinforcement plates 30 by fillet welds 40 between the first- and third reinforcement plates 30a 30c and between the second- and third reinforcement plates 30b 30c.

## Claims

1. A frame (12) for a decanter centrifuge (10), the frame (12) defining a longitudinal direction (L), a vertical direction (V) extending transversally relative to the longitudinal direction (L) and a transverse direction (T) extending transversally relative to the longitudinal direction (L) and the vertical direction (V), the frame (12) comprising:
two elongated box-shaped beams (16) extending parallel relative to each other in the longitudinal direction (L) between a first end (22a) and a second end (22b),
at least two connecting elements (18) extending in the transverse direction (T) and interconnecting the box-shaped beams ; (16) at a first position (24a) along the longitudinal direction (L) and at a second position (24b) along the longitudinal direction (L), respectively, and
at least two ground supports (20) extending from each of the elongated box-shaped beams (16) in the vertical direction (V) at a third position (24c) along the longitudinal direction (L) and at a fourth position (24d) along the longitudinal direction (L), director respectively, the third position (24c) being located adjacent the first end (22a) and the fourth position (24d) being located adjacent the second end (22b),
**characterized in that** each box-shaped beam (16) comprises:
a C-shaped beam (32) defining two horizontal flanges (32a, 32b) and a vertical web (32c) interconnecting the two horizonal flanges (32a, 32b), the two horizontal flanges (32a, 32b) and the vertical web (32c) define an interior channel (36) between themselves, and
a vertical plate (34) interconnecting the two horizontal flanges (32a, 32b) opposite the vertical web (32c), wherein the vertical web (32c) and the two horizonal flanges (32a, 32b) each comprises a reinforcement plate (30a, 30b) attached facing the interior channel (36) of the C-shaped beam (16), the reinforcement plates (30a, 30b) extending in the longitudinal direction (L) between a third end (22c) and a 25 fourth end (22d), the third end (22c) and the fourth end (22d) being located between the first end (22a) and the second end (22b) in the longitudinal direction (L) so that the reinforcement plates (30a, 30b) extend only a part of the distance between the first end (22a) and the second end (22b).

2. The frame according to claim 1, wherein the C-shaped beam being manufactured as a unitary element.

3. The frame according to any of the preceding claims, wherein the box shaped beam is made of metal, such as cast iron or carbon steel.

4. The frame according to any of the preceding claims, wherein the reinforcement plates are attached by spot welding and the reinforcement plates are provided with holes for the spot welding.

5. The frame according to any of the preceding claims, wherein the reinforcement plates are attached by fillet welding and the reinforcement plates define a gap in-between themselves for the fillet welding.

6. The frame according to any of the preceding claims, wherein the reinforcement plates have a thickness of 50%-150% of the thickness of the C-shaped beam, such as about the same as the thickness of the C-shaped beam.

7. The frame according to claim 6, wherein the vertical plate has a thickness of 150%-250% of the thickness of the C-shaped beam, such as about twice the thickness of the C-shaped beam.

8. The frame according to any of the preceding claims, wherein the length between the first end and the second end is at least 20% longer than the distance between the third end and the fourth end, preferably 30% longer, more preferably 40% longer.

9. The frame according to any of the preceding claims, wherein the reinforcement plates are substantially centred between the first end and the second end.

10. The frame according to any of the preceding claims, wherein the distance between the first end and the second end being 5-10 meters, preferably 6-9 meters, and the distance between the third end and the fourth end being 2-5 meters, preferably 3-4 meters.

11. The frame according to any of the preceding claims, wherein the third position is located between the first end and the third end, and, the fourth position being located between the second end and the fourth end.

12. The frame according to any of the preceding claims, wherein at least one of the two connecting elements interconnecting the first ends of the parallel box-shaped beams, and, at least one other of the two connecting elements interconnecting the second ends of the parallel box-shaped beams.

13. The frame according to any of the preceding claims, wherein the first ground support and the second ground support are made as box-shaped legs being attached to one of the respective elongated box-shaped beams.

14. A decanter centrifuge comprising a decanter bowl mounted on a frame according to any of the preceding claims.

15. A method of producing a frame (12) for a decanter centrifuge (10), the frame (12) defining a longitudinal direction (L), a vertical direction (V) extending transversally relative to the longitudinal direction (L) and a transverse direction (T) extending transversally relative to the longitudinal direction (L) and the vertical direction (V), the method comprising the following steps:
providing two C-shaped beams (32) extending parallel relative to each other in the longitudinal direction (L) between a first end (22a) and a second end (22b), each C-shaped beam (32) defining two horizontal flanges (32a, 32b) and a vertical web (32c) interconnecting the two horizontal flanges (32a, 32b), the two horizontal flanges (32a, 32b) and the vertical web (32c) define an interior channel (36) between themselves,
attaching reinforcement plates (30a, 30b) facing the interior channel (36) of the C-shaped beam (32), the reinforcement plates (30a, 30b) extending in the longitudinal direction (L) between a third end (22c) and a fourth end (22d), the third end (22c) and the fourth end (22d) being located between the first end (22a) and the second end (22b) in the longitudinal direction (L) so that the reinforcement plates (30a, 30b) extend only a part of the distance between the first end (22a) and the second end (22b), interconnecting a vertical plate (34) and the two horizontal flanges (32a, 32b) opposite the vertical web (32c), thereby producing two elongated box-shaped beams (16) extending parallel relative to each other in the longitudinal direction (L) between the first end (22a) and a second end (22b),
interconnecting the box-shaped beams (16) at a first position (24a) along the longitudinal direction (L) and at a second position (24b) along the longitudinal direction (L), respectively, by at least two connecting elements (18) extending in the transverse direction (T), and
attaching at least two ground supports (20) to each box-shaped beam (16), the ground supports (20) extending in the vertical direction (V) at a third position (24c) along the longitudinal direction (L) and at a fourth position (24d) along the longitudinal direction (L), respectively, the third position (24c) being located adjacent the first end (22a) and the fourth position (24d) being located adjacent the second end (22b).

## Patentansprüche

1. Rahmen (12) für eine Dekanterzentrifuge (10), wobei der Rahmen (12) eine Längsrichtung (L), eine sich quer zur Längsrichtung (L) erstreckende Vertikalrichtung (V) und eine sich quer zur Längsrichtung (L) und zur Vertikalrichtung (V) erstreckende Querrichtung (T) definiert, wobei der Rahmen (12) Folgendes umfasst:
zwei längliche, kastenförmige Balken (16), die sich parallel zueinander in der Längsrichtung (L) zwischen einem ersten Ende (22a) und einem zweiten Ende (22b) erstrecken,
mindestens zwei Verbindungselemente (18), die sich in der Querrichtung (T) erstrecken und die kastenförmigen Balken (16) an einer ersten Position (24a) entlang der Längsrichtung (L) bzw. an einer zweiten Position (24b) entlang der Längsrichtung (L) miteinander verbinden, und
mindestens zwei Bodenstützen (20), die sich von jedem der länglichen kastenförmigen Balken (16) in der Vertikalrichtung (V) an einer dritten Position (24c) entlang der Längsrichtung (L) bzw. an einer vierten Position (24d) entlang der Längsrichtung (L) erstrecken, wobei die dritte Position (24c) angrenzend zum ersten Ende (22a) und die vierte Position (24d) angrenzend zum zweiten Ende (22b) gelegen ist,
**dadurch gekennzeichnet, dass** jeder kastenförmige Balken (16) Folgendes umfasst:
einen C-förmigen Balken (32), der zwei horizontale Flansche (32a, 32b) und einen vertikalen Steg (32c) definiert, der die beiden horizontalen Flansche (32a, 32b) miteinander verbindet; wobei die beiden horizontalen Flansche (32a, 32b) und der vertikale Steg (32c) zwischen sich einen inneren Kanal (36) bilden, und
eine vertikale Platte (34), die die beiden horizontalen Flansche (32a, 32b) gegenüber dem vertikalen Steg (32c) miteinander verbindet,
wobei der vertikale Steg (32c) und die beiden horizontalen Flansche (32a, 32b) jeweils eine Verstärkungsplatte (30a, 30b) umfassen, die zu dem inneren Kanal (36) des C-förmigen Balkens (16) zeigend befestigt ist, wobei sich die Verstärkungsplatten (30a, 30b) in der Längsrichtung (L) zwischen einem dritten Ende (22c) und einem vierten Ende (22d) erstrecken, wobei das dritte Ende (22c) und das vierte Ende (22d) in der Längsrichtung (L) zwischen dem ersten Ende (22a) und dem zweiten Ende (22b) gelegen sind, sodass sich die Verstärkungsplatten (30a, 30b) nur über einen Teil des Abstands zwischen dem ersten Ende (22a) und dem zweiten Ende (22b) erstrecken.

2. Rahmen nach Anspruch 1, wobei der C-förmige Balken als einteiliges Element gefertigt ist.

3. Rahmen nach einem der vorstehenden Ansprüche, wobei der kastenförmige Balken aus Metall gefertigt ist, wie etwa Gusseisen oder Kohlenstoffstahl.

4. Rahmen nach einem der vorstehenden Ansprüche, wobei die Verstärkungsplatten durch Punktschweißen befestigt sind und die Verstärkungsplatten mit Löchern für das Punktschweißen bereitgestellt sind.

5. Rahmen nach einem der vorstehenden Ansprüche, wobei die Verstärkungsplatten durch Kehlnahtschweißen verbunden sind und die Verstärkungsplatten zwischen ihnen einen Spalt für das Kehlnahtschweißen definieren.

6. Rahmen nach einem der vorstehenden Ansprüche, wobei die Verstärkungsplatten eine Dicke von 50 %-150 % der Dicke des C-förmigen Balkens aufweisen, etwa gleich der Dicke des C-förmigen Balkens.

7. Rahmen nach Anspruch 6, wobei die Verstärkungsplatte eine Dicke von 150 %-250 % der Dicke des C-förmigen Balkens aufweist, etwa gleich der doppelten Dicke des C-förmigen Balkens.

8. Rahmen nach einem der vorstehenden Ansprüche, wobei die Länge zwischen dem ersten Ende und dem zweiten Ende mindestens 20 % länger ist als der Abstand zwischen dem dritten Ende und dem vierten Ende, vorzugsweise 30 % länger, besonders bevorzugt 40 % länger.

9. Rahmen nach einem der vorstehenden Ansprüche, wobei die Verstärkungsplatten im Wesentlichen zwischen dem ersten Ende und dem zweiten Ende zentriert sind.

10. Rahmen nach einem der vorstehenden Ansprüche, wobei der Abstand zwischen dem ersten Ende und dem zweiten Ende 5-10 Meter, vorzugsweise 6-9 Meter und der Abstand zwischen dem dritten Ende und dem vierten Ende 2 bis 5 Meter, vorzugsweise 3 bis 4 Meter beträgt.

11. Rahmen nach einem der vorstehenden Ansprüche, wobei die dritte Position zwischen dem ersten Ende und dem dritten Ende gelegen ist und die vierte Position zwischen dem zweiten Ende und dem vierten Ende gelegen ist.

12. Rahmen nach einem der vorstehenden Ansprüche, wobei mindestens eines der beiden Verbindungselemente die ersten Enden der parallelen kastenförmigen Balken miteinander verbindet und mindestens ein weiteres der beiden Verbindungselemente die zweiten Enden der parallelen kastenförmigen Balken miteinander verbindet.

13. Rahmen nach einem der vorstehenden Ansprüche, wobei die erste und die zweite Bodenstütze als kastenförmige Beine hergestellt sind, die an einem der jeweiligen länglichen kastenförmigen Balken befestigt sind.

14. Dekanterzentrifuge, die eine auf einem Rahmen nach einem der vorstehenden Ansprüche montierte Dekanterschale umfasst.

15. Verfahren zur Herstellung eines Rahmens (12) für eine Dekanterzentrifuge (10), wobei der Rahmen eine Längsrichtung (L), eine sich quer zur Längsrichtung (L) erstreckende Vertikalrichtung (V) und sich eine quer zur Längsrichtung (L) und zur Vertikalrichtung (V) erstreckende Querrichtung (T) definiert, wobei das Verfahren die folgenden Schritte umfasst:
Bereitstellen von zwei C-förmigen Balken (32), die sich in der Längsrichtung (L) zwischen einem ersten Ende (22a) und einem zweiten Ende (22b) parallel zueinander erstrecken, wobei jeder C-förmige Balken (32) zwei horizontale Flansche (32a, 32b) und einen vertikalen Steg (32c) definiert, der die beiden horizontalen Flansche (32a, 32b) miteinander verbindet, wobei die beiden horizontalen Flansche (32a, 32b) und der vertikale Steg (32c) einen inneren Kanal (36) zwischen sich definieren,
Befestigen von Verstärkungsplatten (30a, 30b), die zum inneren Kanal (36) des C-förmigen Balkens (32) zeigen, wobei sich die Verstärkungsplatten (30a, 30b) in der Längsrichtung (L) zwischen einem dritten Ende (22c) und einem vierten Ende (22d) erstrecken, wobei das dritte Ende (22c) und das vierte Ende (22d) in der Längsrichtung (L) zwischen dem ersten Ende (22a) und dem zweiten Ende (22b) gelegen sind, sodass sich die Verstärkungsplatten (30a, 30b) nur über einen Teil des Abstands zwischen dem ersten Ende (22a) und dem zweiten Ende (22b) erstrecken,
Verbinden einer vertikalen Platte (34) und der beiden horizontalen Flansche (32a, 32b) gegenüber dem vertikalen Steg (32c) untereinander, wodurch zwei längliche kastenförmige Balken (16) entstehen, die sich in der Längsrichtung (L) zwischen dem ersten Ende (22a) und einem zweiten Ende (22b) parallel zueinander erstrecken,
Verbinden der kastenförmigen Balken (16) untereinander an einer ersten Position (24a) entlang der Längsrichtung (L) bzw. an einer zweiten Position (24b) entlang der Längsrichtung (L) durch mindestens zwei Verbindungselemente (18), die sich in der Querrichtung (T) erstrecken, und
Befestigen an jedem kastenförmigen Balken (16) von mindestens zwei Bodenstützen (20), wobei sich die Bodenstützen (20) in der Vertikalrichtung (V) an einer dritten Position (24c) entlang der Längsrichtung (L) bzw. an einer vierten Position (24d) entlang der Längsrichtung (L) erstrecken, wobei die dritte Position (24c) angrenzend zum ersten Ende (22a) und die vierte Position (24d) angrenzend zum zweiten Ende (22b) gelegen ist.

## Revendications

1. Châssis (12) pour une centrifugeuse décanteuse (10), le châssis (12) définissant une direction longitudinale (L), une direction verticale (V) s'étendant transversalement par rapport à la direction longitudinale (L) et une direction transversale (T) s'étendant transversalement par rapport à la direction longitudinale (L) et à la direction verticale (V), le châssis (12) comprenant :
deux poutres en caisson allongées (16) s'étendant parallèlement l'une à l'autre dans la direction longitudinale (L) entre une première extrémité (22a) et une seconde extrémité (22b),
au moins deux éléments de liaison (18) s'étendant dans la direction transversale (T) et reliant les poutres en caisson (16) à une première position (24a) suivant la direction longitudinale (L) et à une seconde position (24b) suivant la direction longitudinale (L), respectivement, et
au moins deux supports au sol (20) s'étendant à partir de chacune des poutres en caisson allongées (16) dans la direction verticale (V) à une troisième position (24c) suivant la direction longitudinale (L) et à une quatrième position (24d) suivant la direction longitudinale (L), respectivement, la troisième position (24c) étant située adjacente à la première extrémité (22a) et la quatrième position (24d) étant située adjacente à la deuxième extrémité (22b),
**caractérisé en ce que** chaque poutre en caisson (16) comprend :
une poutre en forme de C (32) définissant deux brides horizontales (32a, 32b) et une âme verticale (32c) reliant les deux brides horizontales (32a, 32b), les deux brides horizontales (32a, 32b) et l'âme verticale (32c) définissent un canal intérieur (36) entre elles, et
une plaque verticale (34) reliant les deux brides horizontales (32a, 32b) opposées à l'âme verticale (32c),
dans lequel l'âme verticale (32c) et les deux brides horizontales (32a, 32b) comprennent chacune une plaque de renfort (30a, 30b) fixée face au canal intérieur (36) de la poutre en forme de C (16), les plaques de renfort (30a, 30b) s'étendant dans la direction longitudinale (L) entre une troisième extrémité (22c) et une quatrième extrémité (22d), la troisième extrémité (22c) et la quatrième extrémité (22d) étant situées entre la première extrémité (22a) et la deuxième extrémité (22b) dans la direction longitudinale (L) de sorte que les plaques de renfort (30a, 30b) ne s'étendent que sur une partie de la distance entre la première extrémité (22a) et la deuxième extrémité (22b).

2. Châssis selon la revendication 1, dans lequel la poutre en forme de C est fabriquée comme un élément unitaire.

3. Châssis selon l'une quelconque des revendications précédentes, dans lequel la poutre en caisson est en métal, tel qu'en fonte ou en acier au carbone.

4. Châssis selon l'une quelconque des revendications précédentes, dans lequel les plaques de renfort sont fixées par soudage par points et les plaques de renfort sont munies de trous pour le soudage par points.

5. Châssis selon l'une quelconque des revendications précédentes, dans lequel les plaques de renfort sont fixées par soudage d'angle et les plaques de renfort définissent un espace entre elles pour le soudage d'angle.

6. Châssis selon l'une quelconque des revendications précédentes, dans lequel les plaques de renfort présentent une épaisseur de 50 % à 150 % de l'épaisseur de la poutre en forme de C, par exemple environ la même que l'épaisseur de la poutre en forme de C.

7. Châssis selon la revendication 6, dans lequel la plaque verticale présente une épaisseur de 150 % à 250 % de l'épaisseur de la poutre en forme de C, par exemple environ deux fois l'épaisseur de la poutre en forme de C.

8. Châssis selon l'une quelconque des revendications précédentes, dans lequel la longueur entre la première extrémité et la deuxième extrémité est au moins 20 % plus longue que la distance entre la troisième extrémité et la quatrième extrémité, de préférence 30 % plus longue, de manière davantage préférée 40 % plus longue.

9. Châssis selon l'une quelconque des revendications précédentes, dans lequel les plaques de renfort sont sensiblement centrées entre la première extrémité et la deuxième extrémité.

10. Châssis selon l'une quelconque des revendications précédentes, dans lequel la distance entre la première extrémité et la deuxième extrémité est de 5-10 mètres, de préférence de 6-9 mètres, et la distance entre la troisième extrémité et la quatrième extrémité est de 2-5 mètres, de préférence de 3-4 mètres.

11. Châssis selon l'une quelconque des revendications précédentes, dans lequel la troisième position est située entre la première extrémité et la troisième extrémité, et la quatrième position est située entre la deuxième extrémité et la quatrième extrémité.

12. Châssis selon l'une quelconque des revendications précédentes, dans lequel au moins un des deux éléments de liaison relie les premières extrémités des poutres en caisson parallèles, et au moins un autre des deux éléments de liaison relie les deuxièmes extrémités des poutres en caisson parallèles.

13. Châssis selon l'une quelconque des revendications précédentes, dans lequel le premier support au sol et le deuxième support au sol sont constitués de pieds en caisson fixés à l'une des poutres en caisson allongées respectives.

14. Centrifugeuse décanteuse comprenant un bol de décantation monté sur un châssis selon l'une quelconque des revendications précédentes.

15. Procédé de fabrication d'un châssis (12) pour une centrifugeuse décanteuse (10), le châssis définissant une direction longitudinale (L), une direction verticale (V) s'étendant transversalement par rapport à la direction longitudinale (L) et une direction transversale (T) s'étendant transversalement par rapport à la direction longitudinale (L) et à la direction verticale (V), le procédé comprenant les étapes suivantes :
la fourniture de deux poutres en forme de C (32) s'étendant parallèlement l'une à l'autre dans la direction longitudinale (L) entre une première extrémité (22a) et une deuxième extrémité (22b), chaque poutre en forme de C (32) définissant deux brides horizontales (32a, 32b) et une âme verticale (32c) reliant les deux brides horizontales (32a, 32b), les deux brides horizontales (32a, 32b) et l'âme verticale (32c) définissant un canal intérieur (36) entre elles,
la fixation de plaques de renfort (30a, 30b) face au canal intérieur (36) de la poutre en forme de C (32), les plaques de renfort (30a, 30b) s'étendant dans la direction longitudinale (L) entre une troisième extrémité (22c) et une quatrième extrémité (22d), la troisième extrémité (22c) et la quatrième extrémité (22d) étant situées entre la première extrémité (22a) et la deuxième extrémité (22b) dans la direction longitudinale (L) de sorte que les plaques de renfort (30a, 30b) ne s'étendent que sur une partie de la distance entre la première extrémité (22a) et la deuxième extrémité (22b),
la liaison d'une plaque verticale (34) et des deux brides horizontales (32a, 32b) opposées à l'âme verticale (32c), produisant ainsi deux poutres en caisson allongées (16) s'étendant parallèlement l'une à l'autre dans la direction longitudinale (L) entre la première extrémité (22a) et une deuxième extrémité (22b),
la liaison des poutres en caisson (16) à une première position (24a) suivant la direction longitudinale (L) et à une deuxième position (24b) suivant la direction longitudinale (L), respectivement, par au moins deux éléments de liaison (18) s'étendant dans la direction transversale (T), et
la fixation d'au moins deux supports au sol (20) à chaque poutre en caisson (16), les supports au sol (20) s'étendant dans la direction verticale (V) à une troisième position (24c) suivant la direction longitudinale (L) et à une quatrième position (24d) suivant la direction longitudinale (L), respectivement, la troisième position (24c) étant située adjacente à la première extrémité (22a) et la quatrième position (24d) étant située adjacente à la deuxième extrémité (22b).
